Europäisches Patentamt

European Patent Office

Office européen des brevets

(19)

(11) Veröffentlichungsnummer : **0 110 483**
**B1**

(12) # EUROPÄISCHE PATENTSCHRIFT

(45) Veröffentlichungstag der Patentschrift :
**19.10.88**

(21) Anmeldenummer : **83201704.0**

(22) Anmeldetag : **01.12.83**

(51) Int. Cl.⁴ : **G 11 B 27/28**, G 11 B 27/32,
G 11 B 5/09

(54) **System zum Aufzeichnen und/oder Auswerten von zwei Markiersignalen.**

(30) Priorität : **07.12.82 AT 4450/82**

(43) Veröffentlichungstag der Anmeldung :
**13.06.84 Patentblatt 84/24**

(45) Bekanntmachung des Hinweises auf die Patenterteilung : **19.10.88 Patentblatt 88/42**

(84) Benannte Vertragsstaaten :
**DE FR GB**

(56) Entgegenhaltungen :
FR-A- 2 341 869
GB-A- 2 058 431
US-A- 3 735 271
US-A- 3 950 782
US-A- 4 343 039

(73) Patentinhaber : **N.V. Philips' Gloeilampenfabrieken**
**Groenewoudseweg 1**
**NL-5621 BA Eindhoven (NL)**

(72) Erfinder : **Goldmann, Peter**
**p/a Int. Octrooibureau B.V. Prof. Holstlaan 6**
**NL-5656 AA Eindhoven (NL)**

(74) Vertreter : **van der Kruk, Willem Leonardus et al**
**INTERNATIONAAL OCTROOIBUREAU B.V. Prof.**
**Holstlaan 6**
**NL-5656 AA Eindhoven (NL)**

EP 0 110 483 B1

## Beschreibung

Die Erfindung bezieht sich auf ein System zum Aufzeichnen und/oder Auswerten von zwei auf einem Aufzeichnungsträger (2) speicherbaren und vom demselben abtastbaren, sich in mindestens einem Parameter voneinander unterscheidenden Markiersignalen (M₁, M₂), das zum Aufzeichnen der Markiersignale eine Aufzeichnungsvorrichtung (12) und zum Auswerten derselben eine Auswertevorrichtung (13) aufweist, wobei die Aufzeichnungsvorrichtung Generatoreinrichtungen (14) zum Erzeugen der auf dem Aufzeichnungsträger zu speichernden Markiersignale und die Auswertevorrichtung Detektoreinrichtungen (22) zum Detektieren von vom Aufzeichnungsträger abgetasteten Markiersignalen aufweist.

Bei einem bekannten System vorstehend angeführter Gattung, wie dies beispielsweise bei einem von der Anmelderin unter der Typenbezeichnung LFH 0303 hergestellten und vertriebenen Diktiergerät zum Aufzeichnen und Wiedergeben von Diktaten realisiert ist, sind die beiden Markiersignale durch sinusförmige Signale gebildet, die sich in ihren Frequenzen voneinander unterscheiden. Ein Markiersignal ist dabei durch ein sinusförmiges Signal mit einer Frequenz von 40 Hz und das andere Markiersignal durch ein Gemisch von zwei sinusförmigen Signalen mit Frequenzen von 40 Hz und 1 500 Hz gebildet. Die Markiersignale dienen hierbei zur Kennzeichnung von bestimmten Stellen von auf dem Aufzeichnungsträger gespeicherten, den Diktaten entsprechenden Informationssignalen, und zwar erfolgt eine Kennzeichnung von den Enden von Diktaten bzw. von Diktatabschnitten mit Diktatkorrekturen entsprechenden Stellen der Informationssignale.

Bei dem bekannten System weisen die Generatoreinrichtungen zum Erzeugen der Markiersignale zwei Sinusgeneratoren und die Detektoreinrichtungen zum Detektieren von Markiersignalen zwei Amplitudendektektoren auf und ferner sind im Hinblick auf eine einwandfreie und störungssichere Funktionsweise sowohl zum Erzeugen als auch zum Auswerten der sinusförmigen Markiersignale Filterschaltungen notwendig, die relativ aufwendig und teuer sind, einen grossen Raumbedarf beanspruchen und zusätzlich einen frequenzmässigen Abgleich erfordern. Ausserdem müssen bei einem solchen System, bei dem sich die Markiersignale frequenzmässig voneinander unterscheiden, die Frequenzen der Markiersignale im Hinblick auf eine stets sichere und fehlerfreie Detektion derselben einen relativ grossen Frequenzabstand aufweisen, was aber zur Folge hat, dass zumindest die Frequenz eines dieser Markiersignale in den Frequenzbereich der auf dem Aufzeichnungsträger speicherbaren Informationssignale fällt, was einerseits eine Störung der Informationssignale durch das betreffende Markiersignal und andererseits einen störenden Einfluss der Informationssignale bei der Auswertung des betreffenden Markiersignales zur Folge hat. Hinsichtlich der Auswertung von sich in ihren Frequenzen voneinander unterscheidenden Markiersignalen ist ferner festzuhalten, dass die Frequenzlage der vom Aufzeichnungsträger abgetasteten Markiersignale von der Fortbewegungsgeschwindigkeit des Aufzeichnungsträgers gegenüber dem die Markiersignale abtastenden Abtastelement abhängig ist, so dass Veränderungen dieser Fortbewegungsgeschwindigkeit während des Abtastens der Markiersignale bzw. eine gegenüber der beim Aufzeichnen verwendeten Fortbewegungsgeschwindigkeit unterschiedliche Fortbewegungsgeschwindigkeit beim Abtasten der Markiersignale, wie dies beim Abtasten der Markiersignale im sogenannten Schnellauf des Aufzeichnungsträgers der Fall ist, sich als Frequenzverschiebungen der Frequenzen der vom Aufzeichnungsträger abgetasteten Markiersignale gegenüber den beim Aufzeichnen derselben gewählten Frequenzen auswirken, was bei der Auswertung der Markiersignale zu berücksichtigen ist und hierbei einen erheblichen Mehraufwand erforderlich macht.

Aus der GB 2 058 431A ist ein System der eingangserwähnten Art bekannt wobei darüberhinaus die Generatoreinrichtungen mindestens einen Impulsgenerator (14) aufweisen, der als Markiersignale zwei Markierimpulsfolgen abgibt, die die gleiche Frequenz, jedoch unterschiedliche, vom Wert 0,5 abweichende Tastverhältnisse aufweisen, wobei bei einem Tastverhältnis k der einen Markierimpulsfolge das Tastverhältnis der anderen Markierimpulsfolge 1-k ist, und wobei die Detektoreinrichtungen (22) mindestens einen Tastverhältnisdetektor (50) aufweisen, der das Tastverhältnis einer Markierimpulsfolge detektiert und in Abhängigkeit vom jeweils detektierten Tastverhältnis ein vorgegebenes Detektionssignal abgibt.

Auf diese Weise ist ein einfacher und kompakter Schaltungsaufbau, für dessen einwandfreie Funktionsweise auch keine separaten Abgleichvorgänge erforderlich sind, erreicht, weil bekanntlich Impulsgeneratoren einen einfachen Aufbau aufweisen und weil Impulssignale, die sich nur in ihren Tastverhältnissen voneinander unterscheiden, einfach generierbar und detektierbar sind. Dadurch, dass die beiden Markierimpulsfolgen die gleiche Frequenz aufweisen, kann dieselbe vorteilhafter Weise so gewählt werden, dass beide Markiersignale frequenzmässig ausserhalb des Frequenzbereiches von Informationssignalen liegen, so dass gegenseitige Beeinflussungen und Störungen zwischen Markiersignalen und Informationssignalen ausgeschlossen sind. Dabei kann der frequenzmässige Abstand zwischen der Frequenz der Markierimpulsfolgen und dem Frequenzbereich der Informationssignale so gross gewählt werden, dass selbst Oberwellen der Markiersignale ausserhalb des Frequenzbereiches der Informationssignale liegen und daher keine störenden Einflüsse verursachen. Dadurch, dass als Parameter, in dem sich die beiden Markiersignale voneinander unterscheiden, das Tastverhältnis der Markierimpulsfolgen gewählt ist, ergibt sich ferner der besondere Vorteil, dass die Auswertung der Markiersignale unabhängig von der Fortbewegungsgeschwindigkeit des Aufzeichnungsträgers gegenüber dem Abtastelement für die Markiersignale beim Abtasten derselben ist, da das Tastverhältnis der abgetasteten Markierimpulsfolgen unabhängig von dieser Fortbewegungsgeschwindigkeit stets gleich gross bleibt. Es sind somit auch bei sich ändernder bzw. gegenüber dem Aufzeichnen unterschiedlicher Fortbewegungsgeschwindigkeit beim Auswerten der Markiersignale keine separaten Massnahmen zum Auswerten erforderlich, was ebenfalls im Hinblick auf einen einfachen Aufbau mit möglichst geringen Mitteln vorteilhaft ist. Dadurch, dass bei einem Tastverhältnis k der einen Markierimpulsfolge das Tastverhältnis der anderen Markierimpulsfolge 1-k gewählt ist, ist erreicht, dass die beiden Markierimpulsfolgenden aufgrund der spiegelbildlichen Lage von deren Tastverhältnissen bezüglich des Tastverhältnisses von 0,5 besonders einfach und sicher voneinander unterscheidbar sind, was im Hinblick auf eine einwandfreie Auswertung der Markiersignale vorteilhaft ist.

Die Erfindung hat sich zur Aufgabe gestellt, ein System wie es aus der GB 2 058 431A bekannt ist, derart weiter zu bilden dass eine weitere Realiserung in digitaler Schaltungstechnik möglich wird und eine einfache und störungssichere Auswertung der Markierimpulsfolgen erreicht werden kann. Hierfür ist die Erfindung dadurch gekennzeichnet, dass der Tastverhältnisdetektor (50) einen Abtastimpulsgenerator (51) zum Erzeugen einer Abtastimpulsfolge, deren Frequenz zumindest um einen dem Reziprokwert des kleineren Tastverhältnisses entsprechenden Faktor grösser als die Frequenz der vom Aufzeichnungsträger abgetasteten Markierimpulsfolgen ist, eine Zählschaltung. (52), die während mindestens einer Periode (T) einer Markierimpulsfolge die während der in dieser Periode liegenden Impulsdauer auftretende Anzahl $Z_i$ von Abtastimpulsen und die während der in dieser Periode liegenden Impulspause auftretende Anzahl $Z_p$ von Abtastimpulsen zählt, und eine Vergleichsschaltung (57) aufweist, die die Anzahlen $Z_i$ und $Z_p$ miteinander vergleicht und aus diesem Vergleich das Tastverhältnis einer Markierimpulsfolge bestimmt. Auf diese Weise ist ein Tastverhältnisdetektor erhalten, der besonders einfach in digitaler Schaltungstechnik realisierbar ist, was im Hinblick auf eine einfache und störungssichere Auswertung der Markierimpulsfolgen vorteilhaft ist. Ausserdem bietet dieser Tastverhältnisdetektor den Vorteil, dass derselbe unabhängig von der Fortbewegungsgeschwindigkeit des Aufzeichnungsträgers gegenüber dem Abtastelement für die Markiersignale beim Auswerten derselben ohne zusätzliche Massnahmen stets eine einwandfreie Detektion der Tastverhältnisse der Markierimpulsfolgen gewährleistet.

Im Hinblick auf eine gute Unterscheidbarkeit der beiden Markiersignale sollen die Tastverhältnisse der Markierimpulsfolgen möglichst unterschiedlich gross sein. Im Hinblick auf einen geringen Oberwellengehalt der beiden Markiersignale sollen die Tastverhältnisse der Markierimpulsfolgen aber möglichst gleich gross sein. In diesem Zusammenhang hat sich hinsichtlich eines diesen beiden gegensätzlichen Anforderungen an die Tastverhältnisse der beiden Markierimpulsfolgen genügenden Kompromisses als vorteilhaft erwiesen, wenn die Tastverhältnisse k bzw. 1-k der beiden Markierimpulsfolgen in der Grössenordnung von 0,25 bzw. 0,75 liegen. Auf diese Weise ist sowohl eine gute Unterscheidbarkeit als auch ein relativ geringer Oberwellengehalt der beiden Markiersignale gewährleistet.

Als Impulsgeneratoren bietet der bekannte Stand der Technik eine Reihe von Möglichkeiten. Beispielsweise kann als Impulsgenerator ein in seinem Tastverhältnis umschaltbarer astabiler Multivibrator vorgesehen sein, wobei dann beide Markierimpulsfolgen vom gleichen Ausgang dieses Multivibrators abgenommen werden. Als besonders vorteilhaft hat sich aber erwiesen, wenn der Impulsgenerator (14) durch einen einzigen in seinem Tastverhältnis fixen astabilen Multivibrator (27 bis 31) mit zwei gegenphasigen Ausgängen (29, 30) gebildet ist und die Markierimpulsfolgen durch die Ausgangsimpulsfolgen der beiden gegenphasigen Ausgänge des astabilen Multivibrators gebildet sind. Auf diese Weise ist erreicht, dass beide Markiersignale ohne separate Umschaltmassnahmen von einem einzigen in seinem Tastverhältnis fixen astabilen Multivibrator erzeugt werden. Ausserdem ist aufgrund der einem astabilen Multivibrator innewohnenden Eigenschaft, dass dessen beide Ausgangssignale genau gegenphasig zueinander sind, auf besonders einfache Weise und auch unabhängig von Bauteiltoleranzen und Versorgungsspannungsänderungen stets die Bedingung an die Tastverhältnisse der beiden Markierimpulsfolgen erfüllt, dass bei einem Tastverhältnis k der einen Markierimpulsfolge das Tastverhältnis der anderen Markierimpulsfolge 1-k ist.

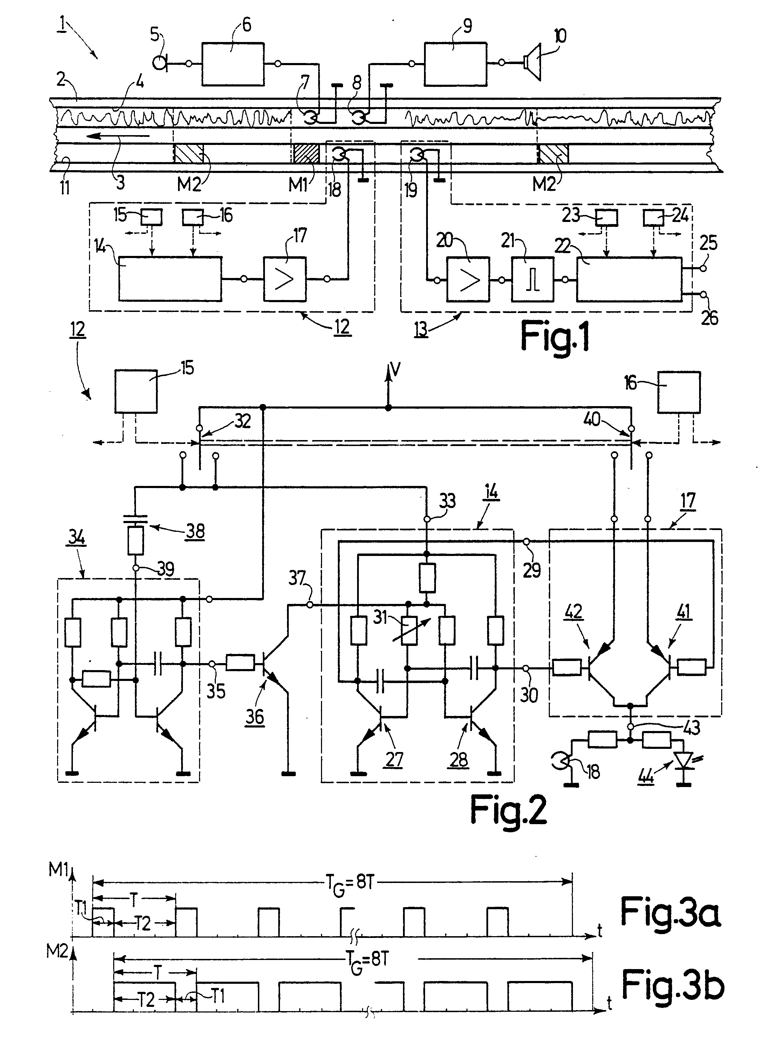

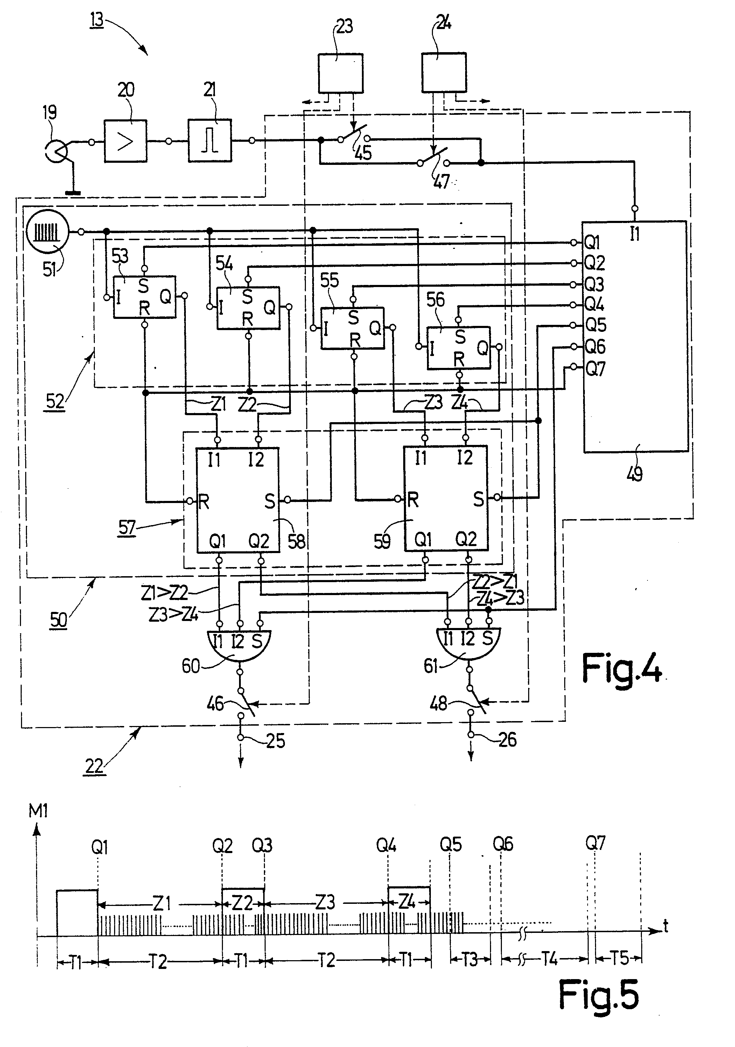

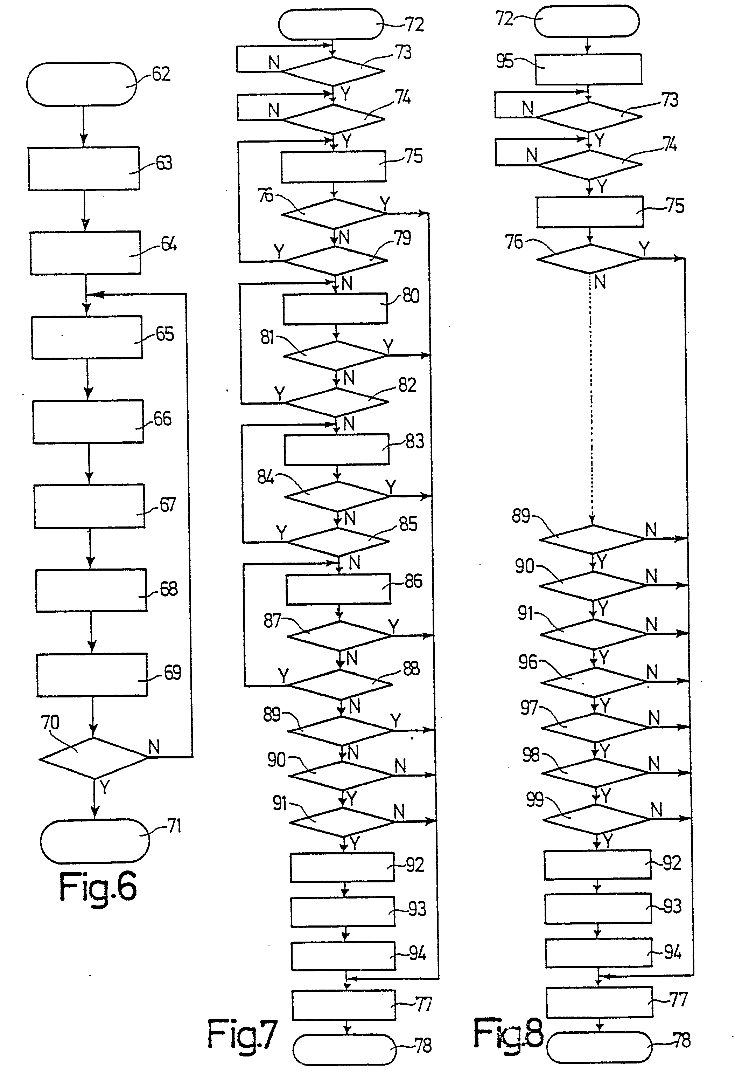

Die Erfindung wird im folgenden anhand von einigen in den Zeichnungen dargestellten Ausführungsbeispielen, näher beschrieben. Die Fig. 1 zeigt schematisch die erfindungswesentlichen Teile eines Aufzeichnungs- und Wiedergabegerätes zum Speichern von Diktatsignalen auf einem bandförmigen Aufzeichnungsträger, auf dem zum Kennzeichnen von bestimmten Stellen der Diktatsignale auch zwei Markiersignale speicherbar und abtastbar sind. Die Fig. 2 zeigt eine Aufzeichnungsvorrichtung zum Aufzeichnen von zwei Markiersignalen, deren Generatoreinrichtungen zum Erzeugen der Markiersignale einen in seinem Tastverhältnis fixen astabilen Multivibrator aufweisen, der als Markiersignale zwei sich in ihren Tastverhältnissen voneinander unterscheidende Markierimpulsfolgen liefert, die in den Figuren 3a und 3b dargestellt sind. Die Fig. 4 zeigt eine Auswertevorrichtung für die beiden Markiersignale gemäss den Fig. 3a und 3b, deren Detektoreinrichtungen einen in digitaler Schaltungstechnik aufgebauten Tastverhältnisdetektor aufweisen. Die Fig. 5 zeigt anhand eines Zeitdiagrammes den zeitlichen Ablauf des im Tastverhältnisdetektor der Auswertevorrichtung gemäss Fig. 4 ablaufenden Detektionsvorganges des Tastverhältnisses einer Markierimpulsfolge gemäss Fig. 3a. Die Fig. 6 zeigt ein Flussdiagramm für einen Programmablauf zum Erzeugen einer Markierimpulsfolge gemäss Fig. 3a mit einem Mikrocomputer. Die Fig. 7 zeigt ein Flussdiagramm für einen Programmablauf zum Detektieren einer Markierimpulsfolge gemäss Fig. 3a mit einem Mikrocomputer. Die Fig. 8 zeigt ein gegenüber dem Flussdiagramm gemäss Fig. 7 erweitertes Flussdiagramm für einen Programmablauf zum Detektieren einer Markierimpulsfolge gemäss Fig. 3a mit einem Mikrocomputer.

Die Fig. 1 zeigt teilweise in schematischer Form ein Gerät 1 zum Aufzeichnen und Wiedergeben von Diktaten auf einem bandförmigen, magnetisierbaren Aufzeichnungsträger 2, der beim Aufzeichnen und Wiedergeben der den Diktaten entsprechenden Informationssignale in Richtung eines Pfeiles 3 von einer Antriebseinrichtung des Gerätes mit einer vorgegebenen Fortbewegungsgeschwindigkeit angetrieben wird und auf dem die Informationssignale in einer Informationsspur 4 speicherbar sind, wie dies in Fig. 1 symbolisch angedeutet ist. Zum Aufzeichnen von Diktaten ist mit dem Gerät 1 ein Mikrofon 5 verbunden, das die akustischen Signale in elektrische Signale umwandelt und einer Aufzeichnungs-Signalverarbeitungsschaltung 6 zuführt, die einen Aufnahme-Magnetkopf 7 speist, der die den Diktaten entsprechenden Informationssignale in der Informationsspur 4 aufzeichnet. Zum Wiedergeben dieser Informationssignale ist ein Wiedergabe-Magnetkopf 8 vorgesehen, der die vom Aufzeichnungsträger 2 abgetasteten Signale einer Wiedergabe-Signalverarbeitungsschaltung 9 zuführt, die zur akustischen Wiedergabe der Diktate einen mit dem Gerät 1 verbundenen Lautsprecher 10 zur Umwandlung der elektrischen Signale in akustische Signale speist.

Der Aufzeichnungsträger 2 weist eine parallel zur Informationsspur 4 verlaufende Markierspur 11 auf, die zum mehrfachen Speichern von zwei sich in mindestens einem Parameter voneinander unterscheidenden Markiersignalen M1 und M2 vorgesehen ist. Die Markiersignale dienen hierbei zur Kennzeichnung von bestimmten Stellen der auf dem Aufzeichnungsträger 2 in dessen Informationsspur 4 gespeicherten, den aufgezeichneten Diktaten entsprechenden Informationssignale. In vorliegendem Fall dient das Markiersignal M1 zum Kennzeichnen von dem Ende von Diktaten entsprechenden Stellen des aufgezeichneten Informationssignales und das Markiersignal M2 zum Kennzeichnen von erforderlichen Diktatkorrekturen entsprechenden Stellen des aufgezeichneten Informationssignales, wie dies in Fig. 1 schematisch mit je einer strichlierten Linie angedeutet ist. Das Speichern solcher Markiersignale auf dem Aufzeichnungsträger ermöglicht es, durch Aufsuchen dieser Markiersignale sehr leicht und einfach die durch dieselben gekennzeichneten Stellen der Informationssignale aufzufinden. Wenn bei einem solchen Suchvorgang ein Markiersignal durch Detektion desselben gefunden wird, dann kann in Abhängigkeit von demselben ein akustisches oder optisches Anzeigesignal abgeleitet werden oder auch der Suchvorgang automatisch beendet werden, wobei dann der Aufzeichnungsträger in einer durch die gefundene Markierung festgelegten Position angehalten wird.

Zum Aufzeichnen der beiden markiersignale M1 und M2 ist eine mit strichlierten Linien umrandete Aufzeichnungsvorrichtung 12 und zum Auswerten derselben eine ebenfalls mit strichlierten Linien umrandete Auswertevorrichtung 13 vorgesehen. Die Aufzeichnungsvorrichtig 12 weist zum Erzeugen der beiden auf dem Aufzeichnungsträger zu speichernden Markiersignale M1 und M2 als Generatoreinrichtungen eine Generatorschaltung 14 auf, die von zwei Tasten 15 und 16 zum Einschalten des Aufzeichnungsvorganges der beiden Markiersignale ansteuerbar ist. Bei Betätigung der Taste 15 gibt die Generatorschaltung 14 das Markiersignal M1 und bei Betätigung der Taste 16 das Markiersignal M2 über eine Verstärkerschaltung 17 an einen Aufnahme-Magnetkopf 18 zur Aufzeichnung in der Markierspur 11 ab. Die Auswertevorrichtung 13 weist einen Wiedergabe-Magnetkopf 19 zum Abtasten der Markiersignale M1 und M2 auf. An den Wiedergabe-Magnetkopf 19 ist eine Verstärkerschaltung 20 angeschlossen, die über eine Signaleformungsschaltung 21 mit durch eine Detektorschaltung 22 gebildeten Detektoreinrichtungen zum Detektieren von vom Aufzeichnungsträger abgetasteten Markiersignalen verbunden ist. Die Detektorschaltung 22 ist von zwei Tasten 23 und 24 zum Einschalten des Auswertevorganges der beiden Markiersignale ansteuerbar und führt bei Betätigung der Taste 23 eine Detektion der Markiersignale M1, wobei sie dann an einem Ausgang 25 ein vorgegebenes erstes Detektionssignal abgibt, und bei Betätigung der Taste 24 eine Detektion der Markiersignale M2 durch, wobei sie dann an einem Ausgang 26 ein vorgegebenes zweites Detektionssignal abgibt. Diese Detektionssignale können nachfolgend im Gerät, wie vorstehend schon erwähnt, zur Auslösung eines akustischen oder optischen Anzeigesignales oder zum automatischen Beenden des Suchvorganges für eine Markierung weiterverwendet werden. An dieser Stelle ist noch festzuhalten, dass beim Aufzeichnen der Markiersignale M1 und M2 der Aufzeichnungsträger 2 ebenso wie beim Aufzeichnen der Informationssignale in Richtung des Pfeiles 3 mit der vorgegebenen Fortbewegungsgeschwindigkeit angetrieben wird. Beim Auswerten der Markiersignale M1 und M2 kann sowohl die Fortbewegungsrichtung als auch die Fortbewegungsgeschwindigkeit des Aufzeichnungsträgers unterschiedlich gegenüber den Verhältnissen beim Aufzeichnen sein. Das Einschalten des Antriebes für den Aufzeichnungsträger zur Fortbewegung desselben erfolgt beim Aufzeichnen bzw. Auswerten von Markiersignalen durch die Betätigung der Tasten 15 und 16 bzw. 23 und 24, was aber hier der Einfachheit halber nicht dargestellt ist.

Die Fig. 2 zeigt eine in Fig. 1 schematisch dargestellte Aufzeichnungsvorrichtung 12 im Detail. Die Generatorschaltung 14 dieser Aufzeichnungsvorrichtung ist einfach durch einen einzigen mit zwei Transistorstufen 27 und 28 aufgebauten, im Betrieb in seinem Tastverhältnis fixen astabilen Multivibrator gebildet, der an seinen beiden Ausgängen 29 und 30 zwei gegenphasige Ausgangsimpulsfolgen als Markiersignale M1 und M2 abgibt, die in den Fig. 3a und 3b dargestellt sind. Die beiden Markierimpulsfolgen weisen die gleiche Periodendauer T und daher auch die gleiche Frequenz 1/T, jedoch unterschiedliche, vom Wert 0,5 abweichende Tastverhältnisse auf, wobei das Tastverhältnis der einen Markierimpulsfolge den Wert k und das Tastverhältnis der anderen Markierimpulsfolge den Wert 1-k aufweist. Es sei erwähnt, dass unter Tastverhältnis das Verhältnis der Impulsdauer zum Impulsabstand, also zur Periodendauer, zu verstehen ist. Die Markierimpulsfolge M1 weist das Tastverhältnis T1 : T auf, dessen Wert T1/T in vorliegendem Fall kleiner als 0,5 und etwa 0,25 ist. Die Markierimpulsfolge M2 weist das Tastverhältnis T2 : T auf, dessen Wert T2/T unter Berücksichtigung der Tatsache, dass die Summe aus der Impulsdauer T1 und der Impulsdauer T2 gleich der Periodendauer T ist, in vorliegendem Fall grösser als 0,5 und etwa 0,75 ist. Die Tastverhältnisse der beiden Markierimpulsfolgen unterscheiden sich gegenüber dem Tastverhältniswert 0,5 einer symmetrischen Impulsfolge um je einen Wert von 0,25, sie liegen also spiegelbildlich zum Tastverhältniswert 0,5. Der astabile Multivibrator 14 weist in der Transistorstufe 27 für Justierzwecke einen einstellbaren Basiswiderstand 31 auf, mit dem die vorstehend angegebenen Tastverhältnisse von etwa 0,25 bzw. 0,75 einjustierbar sind, die im Betrieb des Multivibrators aber unverändert fix bleiben. Zum Anlegen der Versorgungsspannung V an den astabilen Multivibrator 14 ist ein von den beiden Tasten 15 und 16 zum Einschalten des Aufzeichnungsvorganges von Markiersignalen betätigbarer Schalter 32 vorgesehen, der in seiner in Fig. 2 dargestellten Ruhelage die Versorgungsspannung V vom astabilen Multivibrator abgeschaltet hält und in seinen beiden Arbeitslagen, die er bei Betätigung der Tasten 15 und 16 einnimmt, die Versorgungsspannung V an einen Versorgungsspannungsanschluss 33 des astabilen Multivibrators 14 anlegt, so dass derselbe dann an sich schwingen kann.

Wie aus den Fig. 3a und 3b ersichtlich, weisen die Markierimpulsfolgen M1 und M2 eine Gesamtdauer $T_G$ auf, die in vorliegendem Fall der achtfachen Periodendauer T entspricht. Dies bedeutet, dass der astabile Multivibrator 14 bei jeder Betätigung der Tasten 15 bzw. 16 zum Einschalten des Aufzeichnungsvorganges der Markiersignale nur für die Zeitspanne $T_G$ in Betrieb gesetzt wird. Um dies zu erreichen, weist die Aufzeichnungsvorrichtung 12 einen monostabilen Multivibrator 34 auf, dessen Zeitkonstante der Zeitspanne $T_G$ entspricht, und an dessen Ausgang 35 ein durch eine Transistorstufe gebildeter elektronischer Schalter 36 angeschlossen ist, der über einen Steuereingang 37 des astabilen Multivibrators 14 diesen zum Schwingen freigibt. Bei jeder Betätigung einer Taste 15 bzw. 16 wird über den Schalter 32 sowie ein Differenzierglied 38 und einen Steuereingang 39 des monostabilen Multivibrators 34 letzterer angestossen, worauf dieser über seinen Ausgang 35 den elektronischen Schalter 36 für die Zeitspanne $T_G$ in seinen nichtleitenden Zustand steuert. Dies hat zur Folge, dass der astabile Multivibrator 14 für die Zeitspanne $T_G$ zum Schwingen freigegeben wird und für diese Zeitspanne an seinen beiden Ausgängen 29 und 30 die Markierimpulsfolgen M1 und M2 abgibt.

Um jeweils nur die vom Benützer gewünschte Markierimpulsfolge M1 bzw. M2 zum Aufnahme-Magnetkopf 18 weiterzuleiten, weist die Aufzeichnungsvorrichtung 12 einen weiteren mit dem Schalter 32 gekoppelten Schalter 40 auf, der ebenfalls durch Betätigung der Tasten 15 und 16 aus einer Ruhelage in zwei Arbeitslagen verstellbar ist und in jeder Arbeitslage eine Transistor-Verstärkerstufe 41 bzw. 42 der Verstärkerschaltung 17 einschaltet. Bei Betätigung der Taste 15 wird die Verstärkerstufe 41 eingeschaltet und dementsprechend die am Ausgang 29 des astabilen Multivibrators 14 von demselben abgegebene Markierimpulsfolge M1 gemäss Fig. 3a über den Ausgang 43 der Verstärkerschaltung 17 dem Aufnahme-Magnetkopf 18 zum Aufzeichnen auf dem Aufzeichnungsträger 2 verstärkt zugeführt. Bei Betätigung der Taste 16 wird die Verstärkerstufe 42 eingeschaltet und dementsprechend die am Ausgang 30 des astabilen Multivibrators 14 von demselben abgegebene Markierimpulsfolge gemäss Fig. 3b über den Ausgang 43 der Verstärkerschaltung 17 dem Aufnahme-Magnetkopf 18 zugeführt. An den Ausgang 43 der Verstärkerschaltung 17 ist parallel zum Aufnahme-Magnetkopf 18 noch eine eine lichtemittierende Diode aufweisende optische Anzeigeeinrichtung 44 angeschlossen, die im Takt der dem Aufnahme-Magnetkopf 18 zugeführten Impulse ein optisches Blinksignal abgibt, das dem Benützer des Gerätes eine Kontrolle über die Zuführung von Markiersignalen zum Aufnahme-Magnetkopf gibt.

Zu erwähnen ist noch, dass sich beispielsweise bei der Anwendung bei Diktiergeräten in der Praxis für die Impulsdauer T1 bzw. T2 der Impulse der beiden vom Impulsgenerator abgegebenen Markierimpulsfolgen M1 bzw. M2 die Werte von etwa 25 msec bzw. 75 msec als günstig erwiesen haben. Aus diesen Werten ergibt sich eine Periodendauer T der beiden Markierimpulsfolgen von 100 msec, was einer Frequenz von 10 Hz entspricht, und eine Gesamtdauer $T_G$ der beiden Markierimpulsfolgen M1 und M2 von 800 Msec. Wie daraus ersichtlich ist, liegt in diesem Fall die Frequenz der Markierimpulsfolgen von 10 Hz in relativ grossem Frequenzabstand zu dem Frequenzbereich von Diktatsignalen, also Sprachsignalen, dessen untere Grenze in der Praxis etwa mit 300 Hz angenommen werden kann. Hierdurch ist einem störenden Einfluss von Markiersignalen und deren Oberwellen auf Diktatsignale sowie von Diktasignalen auf die Auswertung von Markiersignalen mit ausreichend hoher Sicherheit vorgebeugt. Selbstverständlich sind aber auch andere Werte für die Impulsdauer T1 bzw. T2 möglich, was sich nach dem Anwendungsgebiet und den dabei vorliegenden Gegebenheiten richtet.

Wie aus Vorstehendem ersichtlich, weist die gesamte Aufzeichnungsvorrichtung zum Aufzeichnen der beiden Markiersignale M1 und M2 einen einfachen Aufbau auf. Insbesondere ist hierbei auf die besonders einfache Erzeugung der beiden Markiersignale mit Hilfe von nur einem einzigen, mit einem Minimum an Bauteilen aufgebauten, in seinem Tastverhältnis fixen astabilen Multivibrator hinzuweisen. Ferner ist zu erwähnen, dass die beiden Markierimpulsfolgen aufgrund der Wahl ihrer Tastverhältnisse mit 0,25 bzw. 0,75 einen relativ geringen Oberwellengehalt aufweisen, was im Hinblick auf einen geringen Störeinfluss der Markiersignale auf die Diktatsignale vorteilhaft ist. Ausserdem wird durch die getroffene Wahl der Werte der Tastverhältnisse mit 0,25 bzw. 0,75 eine hohe Sicherheit in der Unterscheidbarkeit der beiden Markierimpulsfolgen erreicht, was im Hinblick auf eine eindeutige und fehlerfreie Auswertung derselben sich als vorteilhaft erwiesen hat.

Die Fig. 4 zeigt eine in Fig. 1 schematisch dargestellte Auswertevorrichtung 13, wobei deren Detektorschaltung 22, der die zu detektierenden, vom Wiedergabe-Magnetkopf 19 abgetasteten Markierimpulsfolgen M1 und M2 über den Verstärker 20 und die als Impulsformer ausgebildete Signalformungsschaltung 21 zugeführt werden, im Detail dargestellt ist. Der Einfachheit halber ist die Spannungsversorgung der einzelnen Schaltungsteile nicht dargestellt. Die Detektorschaltung 22 weist einen nachstehend beschriebenen Tastverhältnisdetektor auf, der das Tastverhältnis einer ihm zugeführten Markierimpulsfolge M1 bzw. M2 detektiert und in Abhängigkeit vom jeweils detektierten Tastverhältnis ein vorgegebenes Detektionssignal abgibt. Aufgrund der Tatsache, dass die Tastverhältnisse k bzw. 1-k der beiden Markierimpulsfolgen vom Wert 0,5 abweichen und gegenüber diesem Wert spiegelbildlich liegen, ist eine besonders einfache Detektion der beiden Tastverhältnisse erreicht, da in diesem Fall die den Tastverhältnissen entsprechenden Verhältnisse der Zeitspannen von Impulsdauer und Impulspause der beiden Markierimpulsfolgen reziprok zueinander sind, was zur Detektion der Tastverhältnisse durch einen einfachen Vergleichsvorgang dieser Zeitspannen im Tastverhältnisdetektor detektierbar ist. An dieser Stelle sei erwähnt, dass das Tastverhältnis k und das Verhältnis v der Zeitspanne der Impulsdauer zur Zeitspanne der Impulspause einer Impulsfolge über die Gleichung $k = v/v + 1$ zusammenhängen.

Zum Aufsuchen eines der beiden entsprechend der Anzahl der markierten Stellen der Informationssignale am Aufzeichnungsträger mehrfach gespeicherten Markiersignale M1 bzw. M2 wird vom Benützer des Gerätes die entsprechende Taste 23 bzw. 24 betätigt, wobei wie erwähnt von den Tasten her auf nicht näher dargestellte Weise der Antrieb für den Aufzeichnungsträger 2 eingeschaltet wird. Im folgenden wird im Hinblick auf eine einfachere Beschreibung angenommen, dass der Aufzeichnungsträger beim Aufsuchen von Markiersignalen in der gleichen Fortbewegungsrichtung gemäss dem Pfeil 3 in Fig. 1 und mit der gleichen Fortbewegungsgeschwindigkeit wie beim Aufzeichnen der Markiersignale angetrieben wird. Durch die Betätigung der Taste 23 sind zwei Schalter 45 und 46 und durch die Betätigung der Taste 24 zwei Schalter 47 und 48 schliessbar, wobei die Schalter 45 und 47 parallel geschaltet und gemeinsam an den Ausgang der Signalformungsschaltung 21 angeschlossen sind und der Schalter 46 zum Ausgang 25 und der Schalter 48 zum Ausgang 26 der Detektionsschaltung 22 führt.

Durch Schliessen eines der beiden Schalter 45 bzw. 47 sind die vom Aufzeichnungsträger abgetasteten Markiersignale einem Eingang I1 einer Ablaufsteuerschaltung 49 der Detektionsschaltung 22 zuführbar, die die zeitliche Aufeinanderfolge des Arbeitsablaufes eines in digitaler Schaltungstechnik ausgebildeten Tastverhältnisdetektors 50 der Detektionsschaltung 22 steuert. Die Ablaufsteuerschaltung 49 kann beispielsweise einen Taktimpulsgenerator enthalten, dessen Taktimpulse einer Zählschaltung zugeführt werden, die in Abhängigkeit von den zugeführten Taktimpulsen und den der Ablaufsteuerschaltung zugeführten Markierimpulsfolgen Steuersignale in binärer Form generiert, die in einer Dekodierschaltung dekodiert und als impulsförmige Steuersignale in analoger Form an den Ausgängen Q1 bis Q7 der Ablaufsteuerschaltung 49 zur zeitlichen Steuerung des Tastverhältnisdetektors 50 zur Verfügung stehen. Da die Generierung von solchen impulsförmigen Steuersignalen mit Hilfe einer wie vorstehend im Prinzip kurz beschriebenen Ablaufsteuerschaltung als in der digitalen Schaltungstechnik übliche Massnahme angesehen werden kann, ist eine detaillierte Darstellung und Beschreibung des Schaltungsaufbaues der Ablaufsteuerschaltung hier nicht vorgenommen, sondern es sind im folgenden nur die Steuerfunktionen derselben im einzelnen angeführt. Erwähnt sein noch, dass selbstverständlich auch anders, beispielsweise in analoger Schaltungstechnik ausgebildete Ablaufsteuerschaltungen mit Differenzierstufen und als Zeitglieder wirksamen Integrierstufen und dgl. einsetzbar sind.

Der Tastverhältnisdetektor 50 weist einen Abtastimpulsgenerator 51 zum Erzeugen einer Abtastimpulsfolge auf, deren Abtastimpulse, wie in weiteren erläutert ist, in einem sich über mindestens eine Periode erstreckenden Zählvorgang zur Bestimmung der Zeitspannen von Impulsdauer und Impulspause einer Markierimpulsfolge zur Detektion des Tastverhältnisses derselben herangezogen werden. Hierbei ist die Frequenz der Abtastimpulsfolge zumindest um einen dem Reziprokwert des kleineren Tastverhältnisses entsprechenden Faktor grösser als die Frequenz der vom Aufzeichnungsträger abgetasteten Markierimpulsfolgen gewählt. Im Hinblick auf eine stets sichere und genaue und auch im wesentlichen von der Fortbewegungsgeschwindigkeit des Aufzeichnungsträgers beim Auswerten der Markiersignale unabhängige Detektion des Tastverhältnisses hat sich bei der Anwendung für Diktiergeräte in der Praxis als zweckmässig erwiesen, wenn die Frequenz der Abtastimpulsfolge im Bereich zwischen dem Fünfzigfachen und dem Hundertfachen der Frequenz der vom Aufzeichnungsträger abgetasteten Markierimpulsfolgen liegt, weil auf diese Weise pro Periodendauer einer abgetasteten Markierimpulsfolge einerseits zur Bestimmung des Tastverhältnisses derselben eine ausreichend hohe Anzahl von Abtastimpulsen zur Verfügung steht, andererseits diese Anzahl von Abtastimpulsen klein genug ist, um sie mit einer Zählschaltung mit möglichst geringem Zählumfang bestimmen zu können.

Zur Durchführung des erwähnten Zählvorganges weist der Tastverhältnisdetektor 50 eine Zählschaltung 52 auf, die aus vier Zählstufen 53, 54, 55 und 56 besteht, deren Eingänge I mit dem Abtastimpulsgenerator 51 verbunden sind. Die Setzeingänge S der Zählstufen 53, 54, 55 und 56, über welche die Zählstufen selektiv einschaltbar sind, sind mit den Ausgängen Q1, Q2, Q3 bzw. Q4 der Ablaufsteuerschaltung 49 verbunden. Die Rücksetz-Eingänge R der Zählstufen 53, 54, 55 und 56, über welche die Zählstufen wieder rücksetzbar sind, sind alle gemeinsam an den Ausgang Q7 der Ablaufsteuerschaltung angeschlossen. Wie nachfolgend noch detailliert beschrieben ist, zählt die Zählschaltung 52 mit ihren Zählstufen in vorliegendem Fall während zwei Perioden einer der Ablaufsteuerschaltung 49 zugeführten Markierimpulsfolge M1 bzw. M2 die während den in diesen beiden Perioden liegenden Impulsdauern auftretende Anzahl $Z_i$ von Abtastimpulsen und die während der in diesen beiden Perioden liegenden Impulspausen auftretende Anzahl $Z_p$ von Abtastimpulsen.

Zur Durchführung des vorerwähnten Vergleichsvorganges weist der Tastverhältnisdetektor eine Vergleichsschaltung 57 auf, die die vorerwähnten, den Zeitspannen der Impulsdauern und der Impulspausen entsprechenden Anzahlen $Z_i$ und $Z_p$ miteinander vergleicht und aus diesem Vergleich das Tastverhältnis einer Markierimpulsfolge bestimmt. Die Vergleichsschaltung 57 besteht aus zwei Vergleichsstufen 58 und 59, die je zwei Eingänge I1 und I2 und zwei Ausgänge Q1 und Q2 sowie je einen Setz-Eingang S und einen Rücksetz-Eingang R aufweisen.

Der Eingang I1 der Vergleichsstufe 58 ist mit dem Ausgang Q der Zählstufe 53 und der Eingang I2 der Vergleichsstufe 58 ist mit dem Ausgang Q der Zählstufe 54 verbunden. Der Ausgang Q der Zählstufe 55 ist mit dem Eingang I1 der Vergleichsstufe 59 und der Ausgang Q der Zählstufe

56 ist mit dem Eingang I2 der Vergleichsstufe 59 verbunden. Die Setz-Eingänge S der beiden Vergleichsstufen 58 und 59 sind gemeinsam an den Ausgang Q5 der Ablaufsteuerschaltung 49 und die Rücksetz-Eingänge R der beiden Vergleichsstufen 58 und 59 sind ebenso wie die Rücksetz-Eingänge R der Zählstufen 53, 54, 55 und 56 mit dem Ausgang Q7 der Ablaufsteuerschaltung 49 verbunden. Die Vergleichsstufen 58 und 59 sind so ausgebildet, dass sie einen Vergleich durchführen, welcher der beiden ihren Eingängen I1 und I2 zugeführten, von den Zählstufen abgegebenen, den Zeitspannen der Impulsdauern bzw. Impulspausen entsprechenden Zählerstände grösser ist und auf diese Weise durch Vergleich dieser von vorerwähnten Zeitspannen entsprechenden Zählerstände das Tastverhältnis einer Markierimpulsfolge detektieren. Für den Fall, dass der Zählerstand der Zählstufe 53 grösser ist als jener der Zählstufe 54, gibt die Vergleichsstufe 58 an ihrem Ausgang Q1 ein betreffendes Schaltsignal als Detektionssignal für ein ermitteltes Tastverhältnis ab. Ist aber der Zählerstand der Zählstufe 54 grösser als jener der Zählstufe 53, dann gibt die Vergleichsstufe 58 an ihrem Ausgang Q2 ein betreffendes Schaltsignal als Detektionssignal ab. In analoger Weise gibt die Vergleichsstufe 59 an ihrem Ausgang Q1 ein Schaltsignal als Detektionssignal ab, wenn der Zählerstand der Zählstufe 55 grösser ist als jener der Zählstufe 56, und an ihrem Ausgang Q2, wenn der Zählerstand der Zählstufe 56 grösser ist als jener der Zählstufe 55.

Die Ausgänge Q1 der beiden Vergleichsstufen 58 und 59 sind mit den Eingängen I1 und I2 eines UND-Gatters 60 und die Ausgänge Q2 derselben sind mit den Eingängen I1 und I2 eines weiteren UND-Gatters 61 verbunden. Je ein Setz-Eingang S der beiden UND-Gatter 60 und 61 ist mit dem Ausgang Q6 der Ablaufsteuerschaltung 49 verbunden. Die Ausgänge der UND-Gatter sind über die bereits erwähnten Schalter 46 bzw. 48 mit den Ausgängen 25 bzw. 26 der Detektorschaltung 22 verbunden.

Nunmehr wird die Funktionsweise der Detektorschaltung 22 anhand des in Fig. 5 dargestellten Zeitdiagrammes zur Detektion einer Markierimpulsfolge M1 beschrieben. Zum Aufsuchen einer Markierimpulsfolge M1 wird die Taste 23 betätigt und dabei der Antrieb des Aufzeichnungsträgers 2 eingeschaltet und die beiden Schalter 45 und 46 geschlossen. Wenn nunmehr während der Fortbewegung des Aufzeichnungsträgers ein Markiersignal M1 bzw. M2 vom Magnetkopf 19 abgetastet wird, gelangt dasselbe über den geschlossenen Schalter 45 an den Eingang I1 der Ablaufsteuerschaltung 49, wodurch diese während des ersten Impulses der Markierimpulsfolge aktiviert wird. Korrespondierend zum Zeitpunkt des Auftretens der fallenden Flanke des ersten Impulses der Markierimpulsfolge schaltet die Ablaufsteuerschaltung 49 über ihren Ausgang Q1 die Zählstufe 53 ein, so dass dieselbe die ihr vom Abtastimpulsgenerator 51 zugeführten Abtastimpulse zählt. Korrespondierend zum Zeitpunkt des Auftretens der steigenden Flanke des zweiten Impulses der Markierimpulsfolge schaltet die Ablaufsteuerschaltung über ihren Ausgang Q1 die Zählstufe 53 ab und über ihren Ausgang Q2 die Zählstufe 54 ein, so. dass nunmehr diese die ihr zugeführten Abtastimpulse zählt. Korrespondierend zum Zeitpunkt der fallenden Flanke des zweiten Impulses schaltet die Ablaufsteuerschaltung über ihren Ausgang Q2 die Zählstufe 54 ab und über ihren Ausgang Q3 die Zählstufe 55 ein, so dass nunmehr diese die ihr zugeführten Abtastimpulse zählt. Korrespondierend zum Zeitpunkt der steigenden Flanke des dritten Impulses schaltet die Ablaufsteuerschaltung über ihren Ausgang Q3 die Zählstufe 55 ab und über ihren Ausgang Q4 die Zählstufe 56 ein, so dass nunmehr diese die ihr zugeführten Abtastimpulse zählt. Korrespondierend zum Zeitpunkt des Auftretens der fallenden Flanke. des dritten Impulses schaltet die Ablaufsteuerschaltung über ihren Ausgang Q4 die Zählstufe 56 ab.

Auf diese Weise haben die Zählstufen 53 und 55 während zwei Perioden der Markierimpulsfolgen M1 die während der in diesen beiden Perioden liegenden Impulspausen auftretende Anzahl $Z_p$ von Abtastimpulsen gezählt, so dass die Zählstufe 53 einen Zählerstand Z1 und die Zählstufe 55 einen Zählerstand Z3 aufweist, wie dies in den Fig. 4 und 5 angegeben ist. Im Normalfall werden die beiden Zählerstände Z1 und Z3 gleich gross sein. Die Zählerstufen 54 und 56 haben während dieser beiden Perioden der Markierimpulsfolgen M1 die während der in diesen Perioden liegenden Impulsdauern auftretende Anzahl $Z_i$ von Abtastimpulsen gezählt, so dass die Zählerstufe 54 einen Zählerstand Z2 und die Zählerstufe 56 einen Zählerstand Z4 aufweist, die im Normalfall ebenfalls gleich gross sein werden.

Nach erfolgtem Abschluss des vorstehend beschriebenen Zählvorganges von Abtastimpulsen schaltet zu einem vorgegebenem Zeitpunkt (siehe Fig. 5) die Ablaufsteuerschaltung 49 über ihren Ausgang Q5 die beiden Vergleichsstufen 58 und 59 über die Setz-Eingänge S für eine Zeitspanne T3 ein, worauf diese die vorstehend bereits angegebenen Grössenvergleiche zwischen den ihnen zugeführten Zählerständen $Z_i$ bzw. $Z_p$, das sind Z2 bzw. Z1 und Z3, durchführen, wobei eine Bestimmung des Tastverhältnisses der Markierimpulsfolge erfolgt. Bei Vorliegen einer Markierimpulsfolge M1, bei der, weil das Tastverhältnis kleiner als 0,5 ist, der Zählerstand Z1 grösser als der Zählerstand Z2 und der Zählerstand Z3 grösser als der Zählerstand Z4 ist, geben die beiden Vergleichsstufen 58 und 59 je an ihrem Ausgang Q1 ein Schaltsignal als Detektionssignal ab. Bei Vorliegen einer Markierimpulsfolge M2, bei der hingegen, weil das Tastverhältnis grösser als 0,5 ist, der Zählerstand Z2 grösser als der Zählerstand Z1 und der Zählerstand Z4 grösser als der Zählerstand Z3 ist, geben die beiden Vergleichsstufen 58 und 59 je an ihren Ausgängen Q2 ein Schaltsignal als Detektionssignal ab.

Nach abgeschlossenem Vergleich der Zählerstände in der Vergleichsschaltung und dabei ermitteltem Tastverhältnis einer Markierimpulsfolge gibt zu einem vorgegebenem Zeitpunkt (siehe Fig. 5) die Ablaufsteuerschaltung 59 über ihren Ausgang Q6 die beiden UND-Gatter 60 und 61 über deren Setz-Eingänge S frei. Diese geben somit dann, wenn an ihren beiden anderen Eingängen I1 und I2 ein Detektionssignal anliegt, ein Ausgangssignal ab. Bei Vorliegen einer Markierimpulsfolge M1 gibt das UND-Gatter 60 und bei Vorliegen einer Markierimpulsfolge M2 gibt das UND-Gatter 61 ein Ausgangssignal ab. Im angenommenen Fall, dass die Taste 23 zum Aufsuchen von Markierimpulsfolgen M1 betätigt wurde, wird aber nur ein vom UND-Gatter 60 abgegebenes Ausgangssignal über den Schalter 46 zum Ausgang 25 der Detektorschaltung 22 zur Weiterverwendung im Gerät durchgeschaltet. Analog hierzu wird bei betätigter Taste 24 zum Aufsuchen von Markierimpulsfolgen M2 nur ein vom UND-Gatter 61 abgegebenes Ausgangssignal über den Schalter 48 zum Ausgang 26 der Detektorschaltung 22 durchgeschaltet.

Wie aus Fig. 5 ersichtlich, hält die Ablaufsteuerschaltung 49 über ihren Ausgang Q6 die beiden UND-Gatter 60 und 61 über deren Setz-Eingänge S für eine vorgegebene Zeitspanne T4 eingeschaltet, welche so gewählt ist, dass das an den Ausgängen 25 bzw. 26 abgegebene Detektionssignal der Detektionsschaltung 22 ausreichend lange für eine Weiterverarbeitung im Gerät zur Verfügung steht. Nach Ablauf dieser Zeitspanne T4 gibt die Ablaufsteuerschaltung an ihrem Ausgang Q7 für eine vorgegebene Zeitspanne T5 ein Rücksetz-Signal ab, das den Rücksetz-Eingängen R der Zählstufen 53, 54, 55 und 56 und der Vergleichsstufen 58 und 59 zugeführt wird, um diese nach erfolgter Detektion einer Markierimpulsfolge wieder rückzusetzen, so dass danach ein nächster Detektionsvorgang durchführbar ist.

Wenn ausser am Setz-Eingang S der beiden UND-Gatter 60 und 61 an nur einem der beiden anderen Eingänge I1 und I2 derselben ein Detektionssignal einer Vergleichsstufe 58 bzw. 59 anliegt, geben die UND-Gatter selbstverständlich kein Ausgangssignal ab. Dies bedeutet, dass jede Markierimpulsfolge zumindest während der Dauer von zwei Perioden ungestört vorliegen muss, um als Markiersignal detektiert zu werden, andernfalls keine Detektion desselben erfolgt. Auf diese Weise werden einmalig auftretende, vom Aufzeichnungsträger abgetastete Störimpulse unterdrückt, so dass diese kein ausgangsseitiges Detektionssignal der Detektorschaltung auslösen. Selbstverständlich könnte die Sicherheit im Hinblick auf die Detektion von Markierimpulsfolgen noch weiter erhöht werden, indem die Detektion auf mehr als zwei Perioden der Markierimpulsfolgen ausgedehnt wird. Für jede weitere Periode sind dann zwei weitere Zählstufen in der Zählschaltung und eine weitere Vergleichsstufe in der Vergleichsschaltung erforderlich ; ferner müssen dann die beiden UND-Gatter neben deren Setz-Eingang S eine entsprechend der Anzahl der Perioden, während der der Tastverhältnisdetektor arbeitet, gewählte Anzahl von Eingängen aufweisen. Die zeitliche Ablaufsteuerschaltung der zusätzlich vorgesehenen Schaltungsteile erfolgt dann von einer dementsprechend erweitert ausgebildeten Ablaufsteuerschaltung. Wie ersichtlich, ist eine höhere Detektionssicherheit auch mit einem entsprechenden Mehraufwand verbunden. In der Praxis hat sich eine über zwei Perioden erstreckende Detektion als ausreichend sicher erwiesen.

Für den Fall, dass der Aufzeichnungsträger beim Auswerten der Markierimpulsfolgen in einem Schnellauf mit einer um einen Faktor N höheren Fortbewegungsgeschwindigkeit angetrieben wird als beim Aufzeichnen derselben, was im Hinblick auf ein rasches Auffinden von markierten Stellen bevorzugt ist, ändert sich an der vorstehend beschriebenen Detektionsmethode nicht, weil das Tastverhältnis bzw. das hierzu entsprechende Verhältnis der Zeitspannen von Impulsdauern und Impulspausen der vom Aufzeichnungsträger abgetasteten Markierimpulsfolgen unabhängig von der Fortbewegungsgeschwindigkeit des Aufzeichnungsträgers beim Abtasten ist. Bei N-facher Fortbewegungsgeschwindigkeit des Aufzeichnungsträgers weist die Periode der abgetasteten Markierimpulsfolgen den Wert T/N auf und dementsprechend betragen die Werte für die Impulsdauern bzw. Impulspausen $T1/N$ und $T2/N$. Dies hat zur Folge, dass die Zählerstände der Zählstufen 53, 54, 55 und 56 des Tastverhältnisdetektors 50 dann $Z1/N$, $Z2/N$, $Z3/N$ und $Z4/N$ sind. Diese Zählerstände ergeben aber beim anschliessenden Vergleich in der Vergleichsschaltung 57 zur Bestimmung des Tastverhältnisses dasselbe Vergleichsergebnis als die hierzu proportionalen Zählerstände $Z1$, $Z2$, $Z3$ und $Z4$, was ja auch der Fall sein muss, weil das Tastverhältnis unverändert bleibt. Schmit ist auch in diesem Fall mit der gleichen Detektionsschaltung ohne zusätzliche Massnahmen eine einwandfreie Detektion der Markierimpulsfolgen gewährleistet. Dies gilt auch dann, wenn das Aufzeichnen von Markiersignalen bei unterschiedlichen Fortbewegungsgeschwindigkeiten des Aufzeichnungsträgers erfolgt, da auch in diesem Fall das Tastverhältnis der Markierimpulsfolgen unverändert bleibt. Zu erwähnen ist noch, dass die vorstehend beschriebene Detektionsmethode auch dann ohne Änderungen anwendbar ist, wenn sich die Fortbewegungsgeschwindigkeit des Aufzeichnungsträgers während des Suchvorganges von Markiersignalen verändert, wie dies der Fall ist, wenn der Antrieb des Aufzeichnungsträgers nicht mittels eines sogenannten Capstans mit konstanter Drehzahl durchgeführt wird, sondern über eine mit konstanter Drehzahl angetriebene Aufwickelspule erfolgt, wobei dann mit zunehmenden Wickeldurchmesser die Fortbewegungsgeschwindigkeit stetig zunimmt. Auch in diesem Fall bleibt das Tastverhältnis der Markierimpulsfolgen stets gleich und ändert sich daher nur der Absolutwert der Zählerstände der Zählstufen 53, 54, 55 und 56, jedoch nicht das in der Vergleichsschaltung zur Bestimmung des Tastverhältnisses geprüfte Verhältnis der Zählerstände der Zählstufen. Schliesslich sei noch erwähnt, dass sich an der vorstehend beschriebenen Detektionsmethode auch dann nichts ändert, wenn der Aufzeichnungsträger zum Aufsuchen von mit Hilfe von Markierimpulsfolgen gekennzeichneten Stellen in der entgegengesetzten Fortbewegungsrichtung als beim Aufzeichnen der Markierimpulsfolgen angetrieben wird.

Die Erzeugung und auch die Detektion von Markierimpulsfolgen M1 und M2 kann zweckmässigerweise auch sehr einfach mit Hilfe eines Mikrocomputers durchgeführt werden, der dann selbstverständlich auch andere Steuerungs- und Überwachungsfunktionen in einem mit einem solchen Mikrocomputer ausgerüsteten Aufzeichnungs- und/oder Wiedergabegerät übernimmt. Beispielsweise kann der im Handel unter der Typenbezeichnung COP 441 erhältliche Mikrocomputer der Firma National Semiconductors zur Anwendung kommen.

Die Fig. 6 zeigt ein Flussdiagramm für einen Programmablauf zum Erzeugen einer Markierimpulsfolge M1, wie sie in Fig. 3a dargestellt ist. Beim Block 62 startet dieser Programmablauf, der durch Betätigen einer Taste zum Einschalten der Erzeugung einer Markierimpulsfolge M1 ausgelöst wird. Beim Block 63 wird nach dem Programmstart mit der Weiterführung des Programmablaufes eine Wartezeit $T_p$ lang abgewartet. Es erfolgt somit für die Zeitspanne $T_p$ keine Erzeugung einer Markierimpulsfolge M1. Damit wird verhindert, dass durch ununterbrochen aufeinanderfolgendes Programmstarten, was durch ständiges Betätigen der vorerwähnten Taste möglich ist, eine ununterbrochene Reihe von Markierimpulsfolgen erzeugt und auf dem Aufzeichnungsträger aufgezeichnet wird. Die einzelnen am Aufzeichnungsträger gespeicherten Markierimpulsfolgen M1 weisen somit zumindest den zeitlichen Abstand entsprechend des Zeitspanne $T_p$ auf. Nach Ablauf der Wartezeit $T_p$ wird beim Block 64 ein Zähler N auf den Wert O gesetzt. Im nächsten Programmschritt wird bei Block 65 ein zur Abgabe der Markierimpulsfolge M1 vorgesehener Impulsausgang des Mikrocomputers auf einen hohen Pegel gesetzt. Danach wird bei Block 66 mit der Weiterführung des Programmablaufes eine Wartezeit T1 lang abgewartet. Es bleibt also der Impulsausgang für die Zeitspanne T1 auf dem hohen Pegel, wodurch der erste Impuls der Markierimpulsfolge mit der Dauer T1 erzeugt wird. Nach Ablauf der Wartezeit T1 wird beim Block 67 der vorerwähnte Impulsausgang auf einen niedrigen Pegel gesetzt. Danach wird bei Block 68 mit der Weiterführung des Programmablaufes eine Wartezeit T2 abgewartet. Es bleibt also der Impulsausgang für die Zeitspanne T2 auf dem niedrigen Pegel, wodurch die erste Impulspause der Markierimpulsfolge mit der Dauer T2 erzeugt wird. Nach Ablauf der Wartezeit T2 wird gemäss Block 69 der Zählerstand des Zählers N um den Wert 1 erhöht. Bei Block 70 wird hierauf geprüft, ob der Zählerstand des Zählers N dem Wert 8 entspricht. Solange dies nicht der Fall ist, wird der Programmablauf ab dem Block 65 nochmals durchlaufen, so dass dann die weiteren Impulse und Impulspausen der Markierimpulsfolge M1 erzeugt werden. Nachdem alle acht Impulse und Impulspausen der Markierimpulsfolge M1 erzeugt sind, weist der Zählerstand des Zählers N den Wert 8 auf, wonach bei Block 71 der Programmablauf dieses Programmes beendet wird und der Mikrocomputer gegebenenfalls auf einen anderen Programmablauf übergeht.

Es ist klar, dass die Erzeugung einer Markierimpulsfolge M2 in vollkommen analoger Weise erfolgen kann, wobei nur die Wartezeiten T1 und T2 im betreffenden Programmablauf miteinander vertauscht sind. In diesem Fall sind dann mit dem Mikrocomputer zwei separate Impulsgeneratoren zur Erzeugung der beiden Markierimpulsfolgen M1 und M2 auf einfache Weise realisiert.

Die Fig. 7 zeigt ein Flussdiagramm für einen Programmablauf zum Detektieren einer Markierimpulsfolge M1, wie sie in Fig. 3 dargestellt ist. Hierbei ist zu erwähnen, dass die entsprechend diesem Programmablauf angewendete Detektionsmethode an sich mit jener übereinstimmt, wie sie anhand der Detektionsschaltung gemäss Fig. 4 beschrieben ist, wobei eine Abtastung einer Markierimpulsfolge mit Hilfe einer Abtastimpulsfolge erfolgt. Beim Block 72 startet dieser Programmablauf, was durch Betätigen einer Taste zum Einschalten des Such- bzw. Auswertevorganges für eine solche Markierimpulsfolge ausgelöst wird. Nach erfolgtem Programmstart wird beim Block 73 geprüft, ob ein Impulseingang des Mikrocomputers, dem die vom Aufzeichnungträger abgetasteten Markierimpulsfolgen zu deren Detektion zuführbar sind, auf einem hohen Pegel liegt. Solange dies nicht der Fall ist, wird die Überprüfung beim Block 73 ständig wiederholt. Wird hingegen ein hoher Pegel festgestellt, dann wird zum nächsten Programmschritt beim Block 74 weitergegangen. Beim Block 73 wird somit das Eintreffen des ersten Impulses einer Markierimpulsfolge überprüft. Beim Block 74 wird überprüft, ob der vorerwähnte Impulseingang einen niedrigen Pegel aufweist. Solange dies nicht der Fall ist, wird die Überprüfung ständig wiederholt ; ist dies hingegen der Fall, dann wird zum nächsten Programmschritt beim Block 75 übergegangen. Beim Block 74 wird somit die fallende Flanke des ersten Impulses einer Markierimpulsfolge detektiert. An dieser Stelle ist zu erwähnen, dass sich die beiden Programmschritte bei den Blöcken 73 und 74 erübrigen, wenn der Mikrocomputer einen Impulseingang aufweist, bei dem hardwaremässig die erste fallende Flanke einer Impulsfolge festgestellt wird, wie dies bei dem erwähnten Mikrocomputer COP 441 der Firma National Semiconductors der Fall ist.

Nach dem Auftreten der fallenden Flanke des ersten Impulses wird beim Block 75 der Zählerstand eines Zählers M um den Wert 1 erhöht. Danach wird beim Block 76 überprüft, ob der Zählerstand des Zählers M grösser als ein zulässiger Maximalwert $(Z_p)_{max}$ ist. Wenn dies der Fall ist, was, die nachstehend noch erläutert ist, einem Störungsfall entspricht, dann wird im Programmablauf auf den Programmschritt bei Block 77 übergegangen.

Beim Block 77 werden der Zähler M sowie drei weitere Zähler M + 1, M + 2 und M + 3 auf den Wert 0 gesetzt, so dass dieselben für einen neuerlichen Detektionsvorgang wieder zur Verfügung stehen. Danach wird als nächster Programmschritt beim Block 78 der Programmablauf beendet, wobei beispielsweise ein neuerlicher Programmablauf zur Detektion einer Markierimpulsfolge M1 freigegeben wird ; auch kann auf einen anderen Programmablauf übergegangen werden.

Wenn die Überprüfung beim Block 76 ergibt, dass der Zählerstand des Zählers M kleiner als der Maximalwert $(Z_p)_{max}$ ist, dann wird im nächsten Programmschritt beim Block 79 überprüft, ob der vorerwähnte Impulseingang weiterhin einen niedrigen Pegel aufweist. Ist dies der Fall, dann wird der Programmablauf ab dem Block 75 zyklisch wiederholt, ist dies hingegen nicht der Fall, dann wird auf den nächsten Block 80 übergegangen. Auf diese Weise wird der Zählerstand des Zählers M vom Wert O weg korrespondierend zum Arbeitstakt des Mikrocomputers fortlaufend erhöht, solange sich der Impulseingang entsprechend der ersten Impulspause einer Markierimpulsfolge auf einem niedrigen Pegel befindet, was dem Zählen von in dieser Impulspause auftretenden Abtastimpulsen entspricht.

Bei Vorliegen einer einwandfreien Markierimpulsfolge darf die Dauer dieser Impulspause eine vorgegebene Maximaldauer nicht überschreiten. Entsprechend dieser Maximaldauer ist der zulässige Maximalwert $(Z_p)_{max}$ für den Zählerstand des Zählers M gewählt. Beim Block 76 wird somit überprüft, ob eine längere als zulässige Impulspause vorliegt. Wenn dies der Fall ist, wird der weitere Programmablauf erst gar nicht in Angriff genommen, sondern in Anbetracht der Tatsache, dass vom Aufzeichnungsträger nur ein Störsignal wiedergegeben wurde, wird auf den Block 77 übergegangen, bei dem der Zähler M wieder auf den Wert O gesetzt wird, um für einen neuerlichen Zählvorgang beim Eintreffen einer ordnungsgemässen Markierimpulsfolge wieder zur Verfügung zu stehen, und nachfolgend bei Block 78 der Programmablauf beendet wird.

Wenn die Prüfung beim Block 79 ergibt, dass der Impulseingang keinen niedrigen Pegel mehr aufweist, also nach dem Eintreffen der steigenden Flanke des zweiten Impulses einer Markierimpulsfolge M1 wird beim Block 80 der Zählerstand des Zählers M + 1 um den Wert 1 erhöht. Hierauf wird beim Block 81 überprüft, ob der Zählerstand des Zählers M + 1 grösser als der Wert $(Z_i)_{max}$ ist. Ist dies der Fall, was wieder einem Störungsfall entspricht, dann wird der Programmablauf beim Block 77 fortgesetzt. Ist dies hingegen nicht der Fall, wird beim Block 82 geprüft, ob der Impulseingang nach dem Eintreffen der steigenden Flanke des zweiten Impulses einer Markierimpulsfolge weiterhin auf einem hohen Pegel liegt. Ist dies der Fall, dann wird der Programmablauf ab dem Block 80 zyklisch wiederholt. Ist dies nicht der Fall, wird der Programmablauf beim Block 83 fortgesetzt. Auf diese Weise wird der Zählerstand des Zählers M + 1 korrespondierend zum Arbeitstakt des Mikrocomputers fortlaufend erhöht, solange sich der Impulseingang entsprechend der Impulsdauer des zweiten Impulses einer Markierimpulsfolge, auf einem hohen Pegel befindet, was dem Zählen von in dieser Impulsdauer auftretenden Abtastimpulsen entspricht.

Bei einer einwandfreien Markierimpulsfolge darf die Impulsdauer eine vorgegebene Maximaldauer nicht überschreiten. Entsprechend dieser Maximaldauer ist der zulässige Maximalwert $(Z_i)_{max}$ für den Zählerstand des Zählers M + 1 gewählt. Beim Block 81 wird somit überprüft, ob ein längerer als zulässiger Impuls vorliegt, und bei Feststellung eines zu langen Impulses wird in Anbetracht der Tatsache, dass ein gestörtes bzw. falsches Signal vorliegt, der Programmablauf beim Block 77 fortgesetzt.

Wenn die Überprüfung beim Block 82 ergibt, dass der Impulseingang keinen hohen Pegel mehr aufweist, also nach dem Eintreffen der fallenden Flanke des zweiten Impulses einer Markierimpulsfolge, dann wird bei Block 83 der Zählerstand des Zählers M + 2 um den Wert 1 erhöht. Danach wird beim Block 84 analog wie beim Block 76 überprüft, ob der Zählerstand des Zählers M + 2 grösser als der Maximalwert $(Z_p)_{max}$ ist. Ist dies der Fall, was wieder einem Störungsfall entspricht, dann wird der Programmablauf bei Block 77 fortgesetzt. Ist dies nicht der Fall, wird beim Block 85 überprüft, ob der Impulseingang nach Eintreffen der fallenden Flanke des zweiten Impulses einer Markierimpulsfolge weiterhin einen niedrigen Pegel aufweist. Ist dies der Fall, dann wird der Programmablauf ab dem Block 83 zyklisch wiederholt. Auf diese Weise wird der Zählerstand des Zählers M + 2 korrespondierend zum Arbeitstakt des Mikrocomputers für die Dauer der zweiten Impulspause einer Markierimpulsfolge fortlaufend erhöht, was dem Zählen von in dieser Impulspause auftretenden Abtastimpulsen entspricht.

Wenn beim Block 85 festgestellt wird, dass der Impulseingang keinen niedrigen Pegel mehr aufweist, also nach dem Eintreffen der steigenden Flanke des dritten Impulses einer Markierimpulsfolge, dann wird beim Block 86 der Zählerstand des Zählers M + 3 um den Wert 1 erhöht. Hierauf wird beim Block 87 analog wie beim Block 81 überprüft, ob der Zählerstand des Zählers M + 3 grösser ist als der Maximalwert $(Z_i)_{max}$. Ist dies der Fall, was wieder einem Störungsfall entspricht, dann wird der Programmablauf beim Block 77 fortgesetzt. Ist dies nicht der Fall, dann wird bei Block 88 überprüft, ob der Impulseingang nach dem Eintreffen der steigenden Flanke des dritten Impulses einer Markierimpulsfolge weiterhin einen hohen Pegel aufweist. Ist dies der Fall, dann wird der Programmablauf ab dem Block 86 zyklisch wiederholt. Auf diese Weise wird korrespondierend zum Arbeitstakt des Mikrocomputers der Zählerstand des Zählers M + 3 während des Impulsdauer des dritten Impulses einer Markierimpulsfolge fortlaufend erhöht, was dem Zählen von während dieses Impulses auftretenden Abtastimpulsen entspricht, welcher Zählvorgang dann beendet wird, wenn nach Eintreffen der fallenden Flanke des dritten Impulses einer Markierimpulsfolge die Überprüfung beim Block 88 ergibt, dass der Impulseingang des Mikrocomputers keinen hohen Pegel mehr aufweist.

Nach Ablauf des bisherigen Programmteiles weisen die Zähler M, M + 1, M + 2 und M + 3 je einen bestimmten Zählerstand auf, wobei die Zählerstände der Zähler M und M + 2 den Zeitspannen der Impulspausen von zwei Perioden einer Markierimpulsfolge entsprechende Werte und die Zählerstände der Zähler M + 1 und M + 3 den Zeitspannen der Impulsdauern dieser beiden Perioden einer Markierimpulsfolge entsprechende Werte aufweisen. Im folgenden Programmabschnitt erfolgt nun die eigentliche Detektion des Tastverhältnisses einer Markierimpulsfolge M1.

Beim Block 89 wird vorerst überprüft, ob die Zählerstände der Zähler M, M + 1, M + 2 bzw. M + 3 einen Wert aufweisen, der kleiner als ein Wert $Z_{min}$ ist. Auf diese Weise wird überprüft, ob die Zeitspanne der Impulsdauern und der Impulspausen je einen bestimmten Mindestwert aufweisen. Ist dies nicht der Fall, beispielsweise wenn kurzzeitig auftretende Störimpulse vorliegen, dann wird unter Berücksichtigung dieser Störung der Programmablauf bei Block 77 fortgesetzt, wobei dann die Zählerstände aller vier Zähler für einen neuerlichen Detektionsvorgang auf den Wert O gesetzt werden. Liegt aber eine einwandfreie Markierimpulsfolge vor, wobei dann die Zählerstände aller vier Zähler grösser als der Wert $Z_{min}$ sind, dann wird beim Block 90 zur Detektion des Tastverhältnisses der Markierimpulsfolge überprüft, ob der der Dauer der ersten Impulspause entsprechende Zählerstand des Zählers M grösser ist als der der Dauer des zweiten Impulses entsprechende Zählerstand des Zählers M + 1, wie dies bei einer Markierimpulsfolge M1 gemäss Fig. 3a der Fall sein muss. Ist dies nicht der Fall, dann wird aufgrund des vorliegenden Störungsfalles der Programmablauf beim Block 77 fortgesetzt. Wenn aber der Zählerstand des Zählers M grösser ist als der Zählerstand des Zählers M + 1, dann wird beim Block 91 in Analogie zum Block 90 und zur nochmaligen Detektion des Tastverhältnisses dieser Markierimpulsfolge überprüft, ob der der Dauer der zweiten Impulspause entsprechende Zählerstand des Zählers M + 2 grösser ist als der der Dauer des dritten Impulses entsprechende Zählerstand des Zählers M + 3, wie dies für eine Markierimpulsfolge M1 der Fall sein muss. Ist dies nicht der Fall, dann wird aufgrund des vorliegenden Störungsfalles der Programmablauf beim Block 77 fortgesetzt. Ist dies hingegen der Fall, dann kann mit grosser Sicherheit angenommen werden, dass entsprechend dem bei den Blöcken 90 und 91 detektierten Tastverhältnis eine Markierimpulsfolge M1 vorliegt.

Es wird dann beim Block 92 ein Impulsausgang des Mikrocomputers, der zum Abgeben eines Detektionssignales beim Auftreten einer Markierimpulsfolge M1 vorgesehen ist, auf einen hohen Pegel gesetzt. Danach wird beim Block 93 mit der Weiterführung des Programmablaufes für eine Wartezeit $T_D$ lang abgewartet. Nach Ablauf der Wartezeit $T_D$ wird der Impulsausgang beim Block 94 wieder auf einen niedrigen Pegel gesetzt. Auf diese Weise wird somit für die Zeitspanne $T_D$ an dem Impulsausgang ein impulsförmiges Detektionssignal vom Mikrocomputer abgegeben, das im Gerät zur Weiterverarbeitung für entsprechende Steuerzwecke zur Verfügung steht. Die Zeitspanne $T_D$ ist hierbei selbstverständlich so gewählt, dass das am Impulsausgang zur Verfügung stehende Detektionssignal ausreichend lange zur Verfügung steht.

Nach erfolgter Abgabe des Detektionssignales am Impulsausgang des Mikrocomputers, also nach erfolgter Detektion eines Markiersignales M1 und dessen Auswertung für Steuerzwecke im Gerät, werden beim Block 77 die vier Zähler M, M + 1, M + 2 und M + 3 auf den Wert O gesetzt, so dass dieselben für einen neuerlichen Detektionsvorgang wieder zur Verfügung stehen. Danauch wird beim Block 78 das Programm beendet.

Es ist klar, dass die Detektion einer Markierimpulsfolge M2 in vollkommen analoger Weise erfolgen kann, wie die anhand vorstehend beschriebenen Programmablaufes erfolgte Detektion einer Markierimpulsfolge M1, wobei dann nur die während des Programmablaufes durchzuführenden Grössenvergleiche sinngemäss umgekehrt werden müssen. In diesem Fall sind dann mit dem Mikrocomputer zwei separate Tastverhältnisdetektoren zur Detektion der Tastverhältnisse der beiden Markierimpulsfolgen M1 und M2 auf einfache Weise realisiert.

Der Programmablauf gemäss Fig. 8, der eine erweiterte Variante des Programmablaufes gemäss Fig. 7 darstellt, weist demgegenüber folgende zusätzliche Programmschritte auf. Nach einem beim Block 72 erfolgten Programmstart wird beim Block 95 mit der Weiterführung des Programmablaufes eine Wartezeit $T_B$ abgewartet. Die Wartezeit $T_B$ entspricht hierbei der Gesamtdauer der vom Aufzeichnungsträger abgetasteten Markierimpulsfolgen. Auf diese Weise ist für den Fall, dass beim Beginn eines Auswertevorganges einer Markierimpulsfolge dem Abtastelement zum Abtasten derselben ein Abschnitt des Aufzeichnungsträgers mit einer darin gespeicherten Markierimpulsfolge gegenüberliegt, die bei einem vorangegangenen Detektionsvorgang bereits detektiert und zur Unterbrechung der Fortbewegung des Aufzeichnungsträgers ausgewertet wurde, trotz der nochmaligen Abtastung dieser bereits zuvor detektierten Markierimpulsfolge eine nochmalige Detektion und Auswertung derselben unterbunden. Es ist somit in diesem Fall durch die Einführung der Wartezeit $T_B$ sichergestellt, dass eine Doppel bzw. Mehrfachdetektion einer Markierimpulsfolge ausgeschlossen ist. Nach Ablauf der Wartezeit $T_B$ wird der Programmablauf analog wie beim Programmablauf gemäss Fig. 7 mit dem Block 73 fortgesetzt. Bis zum Block 91 stimmt der Programmablauf gemäss Fig. 8 mit jenem von Fig. 7 überein.

Beim Block 91 wird überprüft, ob der Zählerstand des Zählers M + 2 grösser als der Zählerstand des Zählers M + 3 ist. Wenn dies der Fall ist, werden beim Programmablauf gemäss Fig. 8 weitere Prüfvergleiche durchgeführt, um in diesem Fall zusätzlich die zulässigen Tastverhältnisse der vom Aufzeichnungsträger abgetasteten Markierimpulsfolgen M1 auf einen vorgegebenen Bereich zu beschränken. In vorliegendem Fall wird angenommen, dass bei einem Nominalwert des Tastverhältnisses von 1/4, wie dies bei der Markierimpulsfolge M1 gemäss Fig. 3a der Fall ist, sich der Bereich der zulässigen Tastverhältnisse von einem Tastverhältniswert von 1/3 bis zu einem Tastverhältniswert von 1/5 erstreckt. In diesem Zusammenhang sei erwähnt, dass in der Praxis die von Aufzeichnungsträger abgetasteten Markierimpulsfolgen M1 bzw. M2 nicht nur exakt ein einziges Tastverhältnis aufweisen, sondern dass sich aufgrund von Toleranzen, von Wobbelerscheinungen und von Beschleunigungseinflüssen bei der Fortbewegung des Aufzeichnungsträgers und dgl. ein Tastverhältnisbereich ergibt. Zur Überprüfung, ob die vom Aufzeichnungsträger abgetasteten Markierimpulsfolgen ein im vorstehend angeführten Tastverhältnisbereich liegendes Tastverhältnis aufweisen, sind im Programmablauf gemäss Fig. 8 die nachfolgend angeführten Programmschritte vorgesehen.

Vorausgehend ist hierbei festzuhalten, dass sich aus der einfach ableitbaren Gleichung $v = k/1 - k$, wobei k das Tastverhältnis und v das Verhältnis der Zeitspannen von Impulsdauer und Impulspause einer Impulsfolge darstellen, ergibt, dass dem Tastverhältniswert von 1/3 ein Verhältniswert der Zeitspannen von Impulsdauer und Impulspause von 1/2 und dass dem Tastverhältniswert von 1/5 ein Verhältniswert der Zeitspannen von Impulsdauer und Impulspause von 1/4 entspricht.

Beim Block 96 wird überprüft, ob der Zählerstand des Zählers M grösser ist als das Doppelte des Zählerstandes des Zählers M + 1, was auf besonders einfache Weise durchführbar ist. Wenn dies nicht der Fall ist, was einem Störungsfall entspricht, wird der Programmablauf beim Block 77 fortgesetzt. Ist dies aber der Fall, was dann eintritt, wenn das Verhältnis der Zeitspannen von Impulsdauer und Impulspause der vom Aufzeichnungsträger abgetasteten Markierimpulsfolge kleiner als der Wert von 1/2 und folglich das Tastverhältnis kleiner als der Wert von 1/3 ist, dann wird beim Block 97 dieselbe Überprüfung wie beim Block 96 nochmals anhand der Zählerstände der Zähler M + 2 und M + 3 durchgeführt. Wenn auch die Überprüfung beim Block 97 ein kleineres Tastverhältnis als 1/3 ergibt, dann wird beim Block 98 überprüft, ob das Verhältnis der Zeitspannen von Impulsdauer und Impulspause der vom Aufzeichnungsträger abgetasteten Markierimpulsfolge grösser als der Wert von 1/4, was dem Tastverhältniswert von 1/5 entspricht, ist. Zu diesem Zweck wird beim Block 98 überprüft, ob der Zählerstand des Zählers M kleiner ist als das Vierfache des Zählerstandes des Zählers M + 1, was ebenfalls auf sehr einfache Weise durchführbar ist. Ist dies nicht der Fall, dann wird der Programmablauf beim Block 77 fortgesetzt. Ist dies aber der Fall, was sich dann ergibt, wenn das Tastverhältnis einen grösseren Wert als 1/5 aufweist, dann wird beim Block 99 dieselbe Überprüfung wie beim Block 98 nochmals anhand der Zählerstände der Zähler M + 2 und M + 3 durchgeführt. Wenn auch diese Überprüfung positiv ausfällt, dann wird der Programmablauf analog wie beim Programmablauf gemäss Fig. 7 mit dem Block 92 fortgesetzt.

Wie aus vorstehender Beschreibung der Flussdiagramme zur Detektion der Tastverhältnisse von Markierimpulsfolgen M1 ersichtlich ist, sind mit Hilfe eines Mikrocomputers eine Vielzahl von Überprüfungen auf einfache Weise und ohne grossen Aufwand durchführbar, woraus sich eine sehr hohe Detektionsgenauigkeit und Störsicherheit ergibt. Selbstverständlich könnte auch hier der Zählvorgang über mehr als zwei Perioden einer Markierimpulsfolge ausgedehnt werden. Die vorstehend beschriebenen Bereichsgrenzen für die Tastverhältnisse sind deshalb sehr günstig, weil zur Überprüfung derselben die betreffenden Zählerstände nur mit dem Faktor 2 bzw. 4 zu multiplizieren sind, was auf besonders einfache Weise durchführbar ist. Selbstverständlich können die Bereichsgrenzen entsprechend den jeweils gegebenen Anforderungen aber auch anders gewählt werden.

Die Erfindung ist vorstehend anhand von Ausführungsbeispielen beschrieben, wobei sowohl die Aufzeichnungsvorrichtung zum Aufzeichnen der Markiersignale als auch die Auswertevorrichtung zum Auswerten der Markiersignale in einem einzigen Gerät vorgesehen sind. Selbstverständlich kann ein erfindungsgemässes Systems zum Aufzeichnen und/oder Auswerten von zwei Markiersignalen auch eine in einem Gerät, beispielsweise in einem tragbaren Taschendiktiergerät mit Batteriebetrieb, vorgesehene Aufzeichnungsvorrichtung zum Aufzeichnen der Markiersignale und eine in einem anderen Gerät, beispielsweise in einem Tischdiktiergerät mit Netzbetrieb, vorgesehene Auswertevorrichtung aufweisen. Auch kann das erfindungsgemässe System auch bei Einrichtungen zum Aufzeichnen und/oder Wiedergeben von Musiksignalen zum Einsatz kommen, wobei die beiden Markierisignale zum Kennzeichnen des Anfanges bzw. des Endes von einzelnen Musikstücken dienen. Selbstverständlich ist das erfindungsgemässe System auch nicht auf das Zusammenwirken mit einem bandförmigen, magnetisierbaren Aufzeichnungsträger beschränkt ; es können auch blattförmige, manschettenförmige oder scheibenförmige Aufzeichnungsträger vorgesehen sein, die auch auf optischem oder kapazitivem Wege abtastbar sind. Es ist auch möglich, die Informationssignale und die Markiersignale aufgrund ihrer voneinander getrennten Frequenzlagen in einer gemeinsamen Spur ohne gegenseitige störenden Beeinflussungen auf einem Aufzeichnungsträger zu speichern, wobei dann die beiden Signale auch mit dem gleichen Abtastelement aufgezeichnet bzw. wiedergegeben werden können. Bei den beschriebenen Ausführungsbeispielen wird ein Zählvorgang beim Detektieren von Markierimpulsfolgen durch die fallende Flanke des ersten Impulses derselben ausgelöst ; dies kann selbstverständlich auch durch eine steigende Flanke eines Impulses erfolgen.

## Patentansprüche

1. System zum Aufzeichnen und/oder Auswerten von zwei auf einem Aufzeichnungsträger speicherbaren und von demselben abtastbaren, sich in mindestens einem Parameter voneinander unterscheidenden Markiersignalen, das zum Aufzeichnen der Markiersignale eine Aufzeichnungsvorrichtung und zum Auswerten derselben eine Auswertevorrichtung aufweist, wobei die Aufzeichnungsvorrichtung Generatoreinrichtungen zum Erzeugen der auf dem Aufzeichnungsträger zu speichernden Markiersignale und die Auswertevorrichtung Detektoreinrichtungen zum Detektieren von vom Aufzeichnungsträger abgetasteten Markiersignalen aufweist, wobei die Generatoreinrichtungen mindestens einen Impulsgenerator aufweisen, der als Markiersignale zwei Markierimpulsfolgen abgibt, die die gleiche Frequenz, jedoch unterschiedliche, vom Wert 0,5 abweichende Tastverhältnisse aufweisen, wobei bei einem Tastverhältnis k der einen Markierimpulsfolge das Tastverhältnis der anderen Markierimpulsfolge 1-k ist, und wobei die Detektoreinrichtungen mindestens einen Tastverhältnisdetektor aufweisen, der das Tastverhältnis einer Markierimpulsfolge detektiert und in Abhängigkeit vom jeweils detektierten Tastverhältnis ein vorgegebenes Detektionssignal abgibt, dadurch gekennzeichnet, dass der Tastverhältnisdetektor einen Abtastimpulsgenerator zum Erzeugen einer Abtastimpulsfolge, deren Frequenz zumindest um einen dem Reziprokwert des kleineren Tastverhältnisses entsprechenden Faktor grösser als die Frequenz der vom Aufzeichnungsträger abgetasteten Markierimpulsfolgen ist, eine Zählschaltung, die während mindestens einer Periode einer Markierimpulsfolge die während der in dieser Periode liegenden Impulsdauer auftretende Anzahl $Z_i$ von Abtastimpulsen und die während der in dieser Periode liegende Impulspause auftretende Anzahl $Z_p$ von Abtastimpulsen zählt, und eine Vergleichsschaltung aufweist, die die Anzahlen $Z_i$ und $Z_p$ miteinander vergleicht und aus diesem Vergleich das Tastverhältnis einer Markierimpulsfolge bestimmt.

2. System nach Anspruch 1, dadurch gekennzeichnet, dass die Tastverhältnisse k bzw. 1-k der beiden Markierimpulsfolgen in der Grössenordnung von 0,25 bzw. 0,75 liegen.

3. System nach Anspruch 1 oder 2, dadurch gekennzeichnet, dass der Impulsgenerator durch einen einzigen in seinem Tastverhältnis fixen astabilen Multivibrator mit zwei gegenphasigen Ausgängen gebildet ist und dass die Markierimpulsfolgen durch die Ausgangsimpulsfolgen der beiden gegenphasigen Ausgänge des astabilen Multivibrators gebildet sind.

### Claims

1. A system for recording and/or detecting two marking signals which can be recorded on or scanned from a record carrier and which differ from each other in respect of at least one parameter, which system comprises a recording device for recording the marking signals and a detection device for detecting said signals, the recording device comprising generator means for generating the marking signals to be recorded on the record carrier and the detection device comprising detector means for detecting the marking signals read from the record carrier, in which the generator means comprise at least one pulse generator, which supplies marking signals in the form of two marking-pulse trains having the same frequency but having different duty factors which differ from the value 0.5 the duty factor of one marking-pulse train being k and the duty factor of the other marking-pulse train being 1-k, and in which the detector means comprise at least one duty-factor detector, which detects the duty factor of a marking-pulse train and which supplies a specific detection signal depending on the detected duty factor, characterized in that the duty-factor detector comprises a scanning-pulse generator, for generating a scanning-pulse train whose frequency is at least a factor corresponding to the reciprocal of the smaller duty factor higher than the frequency of the marking-pulse train scanned from the record carrier, a counting circuit which counts the number Zi of scanning pulses occurring during the pulse width in at least one period of a marking-pulse train and the number Zp of scanning pulses occurring during the pulse spacing in said period, and a comparator circuit, which compares the numbers Zi and Zp with each other and thereby determines the duty factor of a marking-pulse train.

2. A system as claimed in Claim 1, characterized in that the duty factors k and 1-k of the two marking-pulse trains are of the order of magnitude of 0.25 and 0.75 respectively.

3. A system as claimed in Claim 1 or 2, characterized in that the pulse generator comprises a single astable multivibrator with a fixed duty factor and having two outputs of opposite phase and in that the marking-pulse trains are formed by the two output-pulse trains from the opposite-phase outputs of the astable multivibrator.

### Revendications

1. Système d'enregistrement et/ou de détection de deux signaux de marquage pouvant être mémorisés et explorés sur un support d'enregistrement et se distinguant l'un de l'autre par au moins un paramètre, système qui comporte un dispositif d'enregistrement pour enregistrer les signaux de marquage et un dispositif de détection pour détecter lesdits signaux, ledit dispositif d'enregistrement étant muni de dispositifs générateurs pour engendrer les signaux de marquage devant être mémorisés sur le support d'enregistrement et ledit dispositif de détection étant muni de dispositifs détecteurs pour détecter des signaux explorés sur le support d'enregistrement, lesdits dispositifs générateurs étant munis d'au moins un générateur d'impulsions délivrant comme signaux de marquage deux trains d'impulsions de marquage présentant chacun la même fréquence mais un autre taux d'impulsions, différent de la valeur 0,5, le taux d'impulsions de l'un des trains d'impulsions de marquage étant égal à k alors que le taux d'impulsions de l'autre train d'impulsions de marquage est égal à 1-k, et lesdits dispositifs détecteurs étant munis d'au moins un détecteur de taux d'impulsions qui détecte le taux d'impulsions d'un train d'impulsions de marquage et qui, en fonction du taux d'impulsions détecté, délivre un signal de détection prédéterminé, caractérisé en ce que le détecteur de taux d'impulsions comporte un générateur d'impulsions d'exploration pour engendrer un train d'impulsions d'exploration dont la fréquence est au moins supérieure d'un facteur correspondant à la valeur réciproque du faible taux d'impulsions à la fréquence des trains d'impulsions de marquage explorés sur le support d'information, un circuit de comptage qui, au cours d'au moins une période d'un train d'impulsions de marquage, compte, d'une part, le nombre $Z_i$ d'impulsions d'exploration apparaissant pendant la durée d'impulsion située dans cette période et, d'autre part, le nombre $Z_p$ d'impulsions d'exploration apparaissant pendant l'intervalle d'impulsions situé dans cette période, et un circuit comparateur comparant les nombres $Z_i$ et $Z_p$ et déterminant à partir de cette comparaison le taux d'impulsions d'un train d'impulsions de marquage.

2. Système selon la revendication 1, caractérisé en ce que les taux d'impulsions k et 1-k des deux trains d'impulsions de marquage sont respectivement de l'ordre de grandeur de 0,25 et de 0,75.

3. Système selon la revendication 1 ou 2, caractérisé en ce que le générateur d'impulsions est constitué par un seul multivibrateur astable ayant un taux d'impulsions fixe et qui est muni de deux sorties en opposition de phase et en ce que les trains d'impulsions de marquage sont constitués par les trains d'impulsions de sortie des deux sorties en opposition de phase du multivibrateur astable.

Fig.1

Fig.2

Fig.3a

Fig.3b

Fig.4

Fig.5

2

Fig.6

Fig.7

Fig.8